(19) **Europäisches Patentamt**
**European Patent Office**
**Office européen des brevets**

(11) **EP 4 637 011 A1**

(12) **EUROPEAN PATENT APPLICATION**

(43) Date of publication:
**22.10.2025 Bulletin 2025/43**

(21) Application number: **25164326.8**

(22) Date of filing: **18.03.2025**

(51) International Patent Classification (IPC):
**H02M 1/32** (2007.01)

(52) Cooperative Patent Classification (CPC):
**H02M 1/32; H02H 3/087**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.04.2024 GB 202405399**

(71) Applicant: **Rolls-Royce plc
London N1 9FX (GB)**

(72) Inventors:
• **Briff, Pablo A
Derby, DE24 8BJ (GB)**
• **Trainer, David R
Derby, DE24 8BJ (GB)**
• **Seisopoulos, Paschalis
Derby, DE24 8BJ (GB)**

(74) Representative: **Rolls-Royce plc
P.O. Box 31
IP Department (SinA-48)
Derby Derbyshire DE24 8BJ (GB)**

(54) **ELECTRICAL POWER SYSTEM**

(57) An electrical power system 30 and an aircraft 1 comprising an electrical power system 30 are provided. The electrical power system 30 comprises: an electrical power source 31; a DC electrical network 32; a power converter 300 comprising at least one input terminal 301 and first and second DC output terminals DC+, DC-, the at least one input terminal 301 connected to the electrical power source 31, the first and second DC output terminals DC+, DC- connected to the DC electrical network 32; a DC link capacitor $C_{DC}$ connected between the first and second DC output terminals DC+, DC-; a power semiconductor switch 34 connected in series with the DC link capacitor $C_{DC}$ between the first and second DC output terminals DC+, DC-; and a control unit 35 configured to respond to a fault in the DC electrical network 32 by opening the power semiconductor switch 34, whereby discharge of the DC link capacitor $C_{DC}$ is prevented.

*FIG. 6*

**Description**

**TECHNICAL FIELD**

The present disclosure concerns an electrical power system comprising a power electronics converter.

**BACKGROUND**

Aircraft and their power and propulsion systems are becoming increasingly electric in their design. Compared with traditional aircraft, electric aircraft, hybrid-electric aircraft and so-called 'more electric' aircraft have higher levels of electrical power demand. They meet this demand through on-board generation (e.g., electrical generators coupled to spools of gas turbine engines) and/or on-board energy storage systems (e.g., batteries).

Electrical power may be distributed to loads through one or more DC electrical networks. In some systems, the electrical power source(s) (e.g., generators and batteries) interface with DC electrical networks via power converters, including AC:DC power converters and DC:DC power converters. Most power converters, including both AC:DC power converters and DC:DC power converters, comprise a capacitor, often referred to as the DC link capacitor or output capacitor, connected in the DC link that connects the power converter to the DC electrical network. The capacitor helps maintain a smooth waveform across the DC outputs of the converter.

With higher levels of power being delivered from electrical power sources to DC electrical networks, a challenge is managing the increased level of fault current that may flow following a fault (e.g., a short circuit fault in a DC network). One concern is the pulse of current that may flow due to the discharge of the DC link capacitor when the voltage across it collapses. Although this pulse is short in duration (e.g., tens to hundreds of microseconds), the peak current may exceed the ratings of the components and may damage the power converter.

EP 4283851 A1 discloses methods for protecting against the effects of DC link capacitor discharge following a DC fault. A first of these is to respond to a fault by turning on all transistors (e.g., MOSFETS) of an AC:DC converter to protect the anti-parallel diodes, as they may be biased into conduction of the high current pulse if and when the collapsing voltage crosses zero and reverses. A second is the provision of an additional diode in parallel with the DC link capacitor, to conduct the high pulse of current if and when the voltage reverses.

**SUMMARY**

According to a first aspect, there is an electrical power system, comprising:

an electrical power source;
a DC electrical network;
a power converter comprising at least one input terminal and first and second DC output terminals, the at least one input terminal connected to the electrical power source, the first and second DC output terminals connected to the DC electrical network;
a DC link capacitor connected between the first and second DC output terminals;
a power semiconductor switch connected in series with the DC link capacitor between the first and second DC output terminals; and
a control unit configured to respond to a fault in the DC electrical network by opening the power semiconductor switch, whereby discharge of the DC link capacitor is prevented.

The control unit may be configured to open the power semiconductor switch in response to a drop in a voltage between the first and second DC output terminals.

The control unit may be configured to open the power semiconductor switch in response to an increase in a current flowing from the DC link capacitor.

The power semiconductor switch may comprise a depletion-mode MOSFET or a JFET. The power semiconductor switch may comprise an arrangement comprising a pair of depletion-mode MOSFETs and anti-parallel diodes connected in series opposition.

The control unit may be a hardware-implemented control unit.

The control unit may comprise: a potential divider comprising a first resistor and a second resistor connected in series between the first and second DC output terminals; and a comparator configured to compare a voltage across the second resistor with a pre-determined threshold voltage, and to output a signal to the power semiconductor switch to open the power semiconductor switch if the voltage across the second resistor passes the pre-determined threshold voltage.

The comparator may comprise an operational amplifier.

A resistance of the first resistor may be greater than a resistance of the second resistor.

The second resistor may be connected between the first resistor and a negative polarity one of the first and second DC outputs.

The control unit may further comprise a voltage source configured to provide the pre-determined threshold voltage as an input to the comparator.

The voltage source may comprise an energy storage device.

The energy storage device may comprise a capacitor.

The voltage source may comprise a potential divider connected across the DC link capacitor.

The control unit may further comprise a latch connected between an output of the comparator and the power semiconductor switch. The latch may be a resettable latch.

The DC link capacitor may comprise a first capacitor and a second capacitor connected in parallel between the first and second DC output terminals, and the power semiconductor switch may be connected in series with only the first capacitor.

A capacitance of the first capacitor may be greater than a capacitance of the second capacitor. For example, the capacitance of the first capacitor may be at least three times greater than the capacitance of the second capacitor.

The second capacitor may comprise a plurality of capacitors connected in parallel.

The control unit may be further configured to, in response to a fault in the DC electrical network, cause the power converter to enter a crowbar configuration. In the crowbar configuration, only low-side or only high-side power semiconductor switches of the power converter may be switched on.

The electrical power source may be a rotary electrical machine, and the power converter may be an AC:DC power converter.

The electrical power source may be a DC power source, and the power converter may be a DC:DC power converter.

According to a second aspect, there is an aircraft comprising the electrical power system of the first aspect.

The skilled person will appreciate that, except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## BRIEF DESCRIPTION OF THE DRAWINGS

Embodiments will now be described by way of example only with reference to the accompanying drawings, which are purely schematic and not to scale, and in which:

**FIG.1A** illustrates a portion of an electrical power system in which a DC electrical power source interfaces with a DC electrical network via a DC:DC power converter;

**FIG.1B** illustrated a portion of an electrical power system in which an AC electrical power source interfaces with a DC electrical network via an AC:DC power converter;

**FIG.2A** illustrates an exemplary DC:DC power converter;

**FIG.2B** illustrates an exemplary AC:DC power converter;

**FIG. 3** illustrates how a DC network fault impacts an electrical power system;

**FIG. 4** illustrates an electrical power system in which the DC link capacitor is connected in series with a power semiconductor switch whose state is controlled by a control unit;

**FIG. 5A** illustrates a depletion mode MOSFET;

**FIG. 5B** illustrates a JFET;

**FIG. 5C** illustrates an enhancement mode MOSFET;

**FIG. 5D** illustrates arrangement with two depletion mode MOSFETs connected in series opposition;

**FIG. 6** illustrates a hardware implementation of a control unit for controlling the state of the power semiconductor switch;

**FIG. 7** illustrates another implementation of the control unit;

**FIG. 8** illustrates an arrangement in which the DC link capacitor is split into two or more parallel banks; and

**FIG. 9** is a plan view of an aircraft.

## DETAILED DESCRIPTION

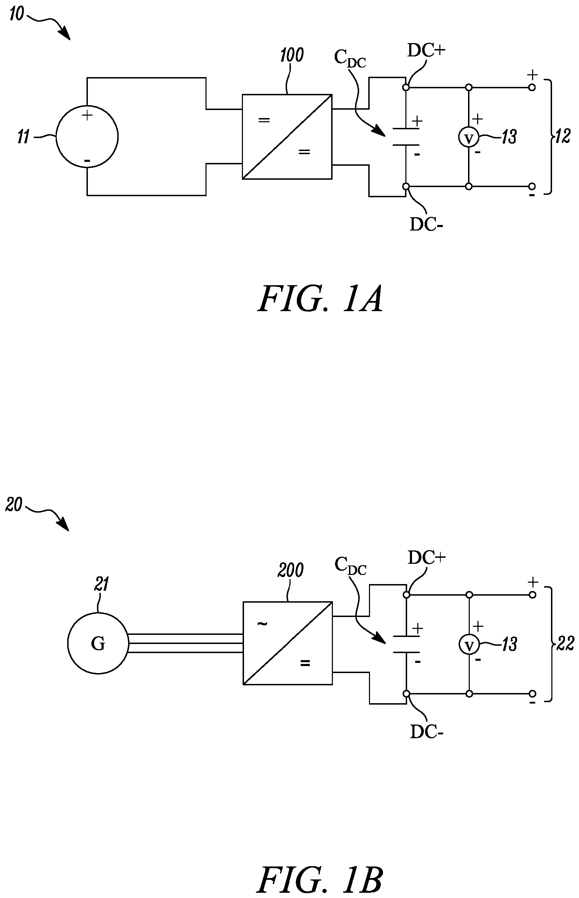

**FIG. 1A** illustrates a portion of an electrical power system 10. The electrical power system 10 includes a DC power source 11, for example a battery or fuel cell, that supplies electrical power to a DC electrical network 12 via a DC:DC power electronics converter 100. At an input side, the DC:DC power converter 100 is connected to the DC power source 11. At an output side, first and second (positive and negative) DC output terminals DC+, DC- of the DC:DC power converter 100 are connected to the DC network 12. The electrical power system 10 further includes a DC link capacitor, $C_{DC}$, connected between the first and second DC output terminals DC+, DC-. The DC link capacitor $C_{DC}$, which is sometimes referred to in the art as the output capacitor or the DC capacitor, may be provided as part of the DC:DC power converter 100.

**FIG. 1B** illustrates a portion of another electrical power system 20. The electrical power system 20 is similar to that of FIG. 1A, except the power source 21 is an AC power source and the power converter 200 is an AC:DC power converter. The AC power source 21 may be, for example, a rotary electrical machine operable as a generator. In the illustrated example, it is a three-phase generator. As in the system 10 of FIG. 1A, the power converter 200 has DC output terminals DC+, DC- that connect to a DC electrical network 22 and have a DC link capacitor $C_{DC}$ connected therebetween.

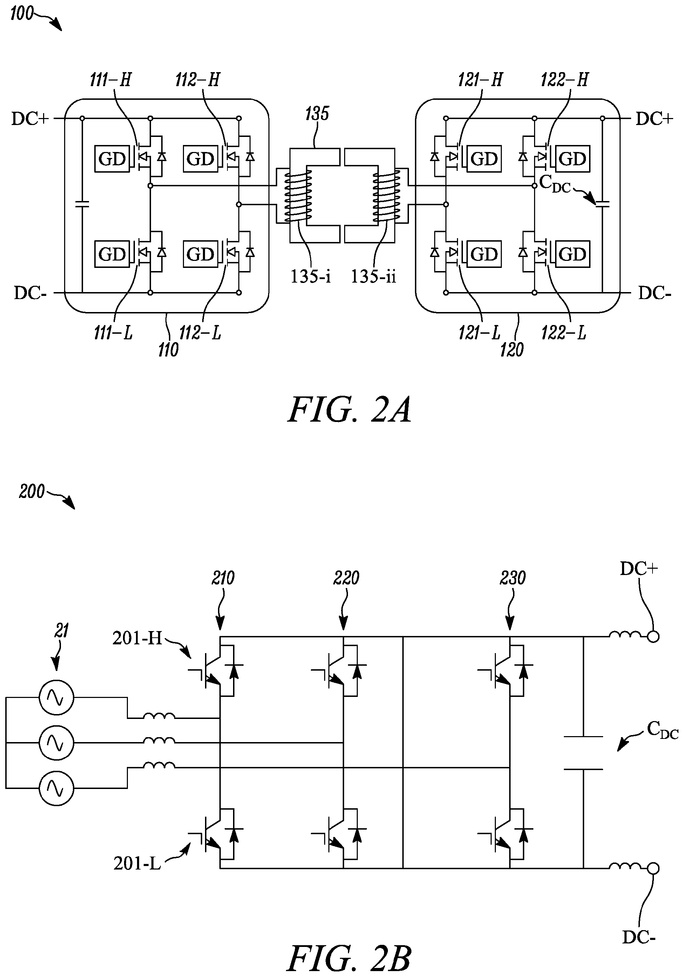

The DC:DC power converter 100 of FIG. 1A may be of any type suitable for the desired application. Purely as example, **FIG. 2A** illustrates a DC:DC power converter 100 of the Dual Active Bridge (DAB) type. The DAB DC:DC converter 100 comprises an DC:AC power converter circuit 110 and an AC:DC power converter circuit 120 connected back-to-back at their AC sides via an intermediate transformer 135 that provides galvanic isolation. DC output terminals DC+, DC- of the AC:DC converter 120 form the DC output terminals of the DC:DC power converter 100, and a DC link capacitor $C_{DC}$ is shown connected between the DC output terminals of the DC:DC converter 100.

The DC:AC converter circuit 110 comprises a pair of DC input terminals (DC+, DC-) and first and second half-bridge circuits connected between the DC input terminals and in parallel with each other. The first half-bridge circuit includes a high-side power semiconductor switch 111-H and a low-side power semiconductor switch 111-L. Likewise, the second half-bridge circuit includes a high-side power semiconductor switch 112-H and a low-side power semiconductor switch 112-L. For each half-bridge, an intermediate AC node between the low-side and high-side power semiconductor switches is connected to a terminal of a first winding 135-i of the transformer 135.

The AC:DC converter circuit 120 comprises a pair of DC output terminals (DC+, DC-) and first and second half-bridge circuits connected between the DC output terminals and in parallel with each other. The first half-bridge circuit includes a high-side power semiconductor switch 121-H and a low-side power semiconductor switch 121-L. Likewise, the second half-bridge circuit includes a high-side power semiconductor switch 122-H and a low-side power semiconductor switch 122-L. For each half-bridge, an intermediate AC node between the low-side and high-side power semiconductor switches is connected to a terminal of a second winding 135-ii of the transformer 135.

In the illustrated example, each power semiconductor switch of the DC:DC power converter 100 comprises a MOSFET and a diode connected in anti-parallel with the MOSFET. The anti-parallel diodes may be discrete components or represent the weak body diode character of the MOSFETs. Other power converters may use, for example, IGBTs with discrete anti-parallel diodes.

The AC:DC power converter 200 of FIG. 1B may be of any type suitable for the desired application. Purely as example, **FIG. 2B** illustrates an AC:DC power converter 200 of the two-level three-phase type. The AC:DC power converter 200 has output terminals DC+, DC-, between which three half-bridge circuits 210, 220, 230 and a DC link capacitor $C_{DC}$ are connected. Each half-bridge circuit 210, 220, 230 comprises a high-side power semiconductor switch 210-H and a low-side power semiconductor switch 210-L and an intermediate node between its low-side switch and high-side switch. Each intermediate node connects to an AC input, for example one of the phase connections of an electrical machine 21. The power semiconductor switches 210-L, 210-H again comprise MOSFETs and anti-parallel diodes but could instead comprise IGBTs and anti-parallel diodes.

In both systems 10, 20, the DC link that connects the DC outputs DC+, DC-of the power converter 100, 200 to the DC electrical network 12, 22 comprises a DC link capacitor $C_{DC}$. When the systems 10, 20 are started up, the DC link capacitor $C_{DC}$ is charged until the voltage across it matches the network voltage, which may, for example, be 270 V DC or 540 V DC in some aircraft applications. In use, the DC link capacitor $C_{DC}$ helps smooth the DC output provided by the power converter 100, 200, for example by absorbing transients from the power source 11, 21 and smoothing high frequency fluctuations from the switching of the power converter 100, 200.

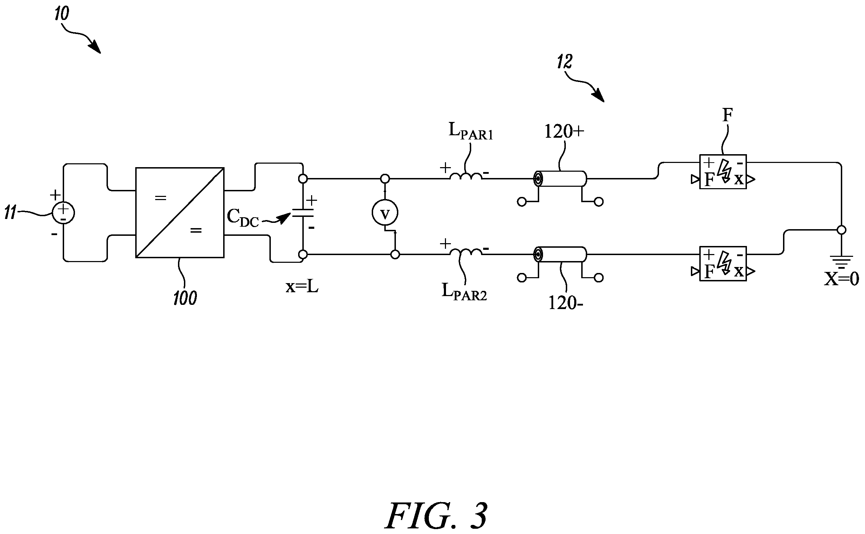

To explain system behaviour in the event of a DC fault (e.g., a short circuit somewhere in a DC electrical network), **FIG. 3** schematically illustrates an electrical power system 10 comprising a power source 11, a power converter 100 and a DC electrical network 12. Although a system 10 with a DC power source 11 and a DC:DC power converter 100 is illustrated, the following applies equally to an electrical power system 20 with an AC power source 21 and an AC:DC power converter 200.

The DC electrical network 12 comprises transmission lines 120+, 120- with characteristic impedances $Z_0$. The transmission line has a voltage profile $V(x, t)$, where x is the physical position on the transmission line and t is time.

Without loss of generality, a fault, F, occurs at time $t = 0$ at a position $x = 0$. The DC link capacitor $C_{DC}$ is located at position $x = L$, i.e., the physical distance between the fault and the DC link capacitor $C_{DC}$ along the length of transmission lines 120+, 120- is L. The fault creates a voltage boundary condition: $V(0,t) = 0$ V while the fault is present. The total DC voltage waveform $V(x,t)$ is formed of the superposition of an incident waveform $V_{inc}(x,t)$ travelling from the converter 100 to the fault (left to right in FIG. 3), and a reflected waveform $V_{rfl}(x,t)$ travelling from the fault to the converter (right to left in FIG. 3). A reflection coefficient, $\rho$, models the amount of energy that is reflected from an incident waveform to form a reflected waveform, defined by:

$$\rho = \frac{Z_{fault} - Z_0}{Z_{fault} + Z_0} \qquad (1)$$

Where there is no fault, the impedance of the transmission line is equal to its characteristic impedance $Z_0$, so $Z_{fault}$ = $Z_0$ (i.e., no fault), leading to $\rho$ = 0. With a voltage in the DC link, an incident waveform of value $V_{inc1}$ = $+V_{dc}$ from the converter 100 to the load (left to right).

Consider now a solid fault in the DC line with an impedance $Z_{fault}$ = 0 $\Omega$, as shown in FIG. 3. The incident wave $V_{inc1}$ = $+V_{dc}$ which travels to the fault, F, encounters an interface (i.e., an impedance mismatch compared to the transmission line characteristic impedance, $Z_0$) and this creates a reflection coefficient $\rho$ = -1. Due to the negative reflection coefficient, the reflected waveform $V_{rfl1}$ = $-V_{dc}$. The reflected waveform travels from the fault to the converter, superimposing with the incident waveform to create the total voltage V(x,t) along the DC line. This voltage varies between 0 V and $+V_{dc}$ depending on the position in the line, for a given time t.

The travelling waveform travels at a propagation speed, v. Therefore, it takes a time equal to $t_{prop}$ = L/v for the fault waveform to arrive at the DC output terminals of the converter 100. At the converter, the incident and reflected waveforms add up to form a voltage $V(L, t_{prop})$ = 0 V. At this point, the converter 100 sees a fault across its terminals DC+, DC-, since its output voltage has changed to 0 V.

Considering parasitic and/or fitted inductances at the output terminals of the converter 100 ($L_{PAR1}$, $L_{PAR2}$ in FIG. 3), a further incident waveform is created by the reflection of the reflected waveform $V_{rfl1}$ back towards the fault. This is because an inductor presents itself as an open circuit for the current waveform that arises from the reflected voltage, and hence it can be modelled as an open circuit, $Z_L$ = $+\infty$, giving rise to a $\rho$ = +1. A second incident waveform $V_{inc2}$ = $-V_{dc}$ is now formed, which superimposes with $V_{inc1}$ and $V_{rfl1}$. At this point in time, the total voltage at the converter's output terminals is given by:

$$V\left(x = L, t = t_{prop} + \Delta t\right) = V_{inc1} + V_{inc2} + V_{rfl} = +V_{dc} + (-V_{dc}) + (-V_{dc}) = -V_{dc}$$

This process of reflection continues until the energy is dissipated by the resistance (e.g., parasitic resistance) in the transmission line.

In summary, immediately prior to the fault, the voltage across the DC output terminals DC+, DC- is $+V_{dc}$. A short amount of time later, at $t_{prop}$, the fault reaches the DC output terminals and the voltage collapses. With insufficient voltage to oppose to the discharge of the DC link capacitor, $C_{DC}$, it begins to discharge. A short amount of time later, further reflections due to the parasitic impedance of the DC link may cause the voltage to cross zero and become negative. With a negative voltage across the DC output terminals DC+, DC-, the anti-parallel diodes of the power semiconductor switches of the converter 100 may become biased into conduction. If this coincides with the discharge of the DC link capacitor, $C_{DC}$, the high pulse of current may be carried by the anti-parallel diodes. If the anti-parallel diodes are not rated to carry this current, and they are preferably not because this would significantly add to their size and mass, they may be damaged.

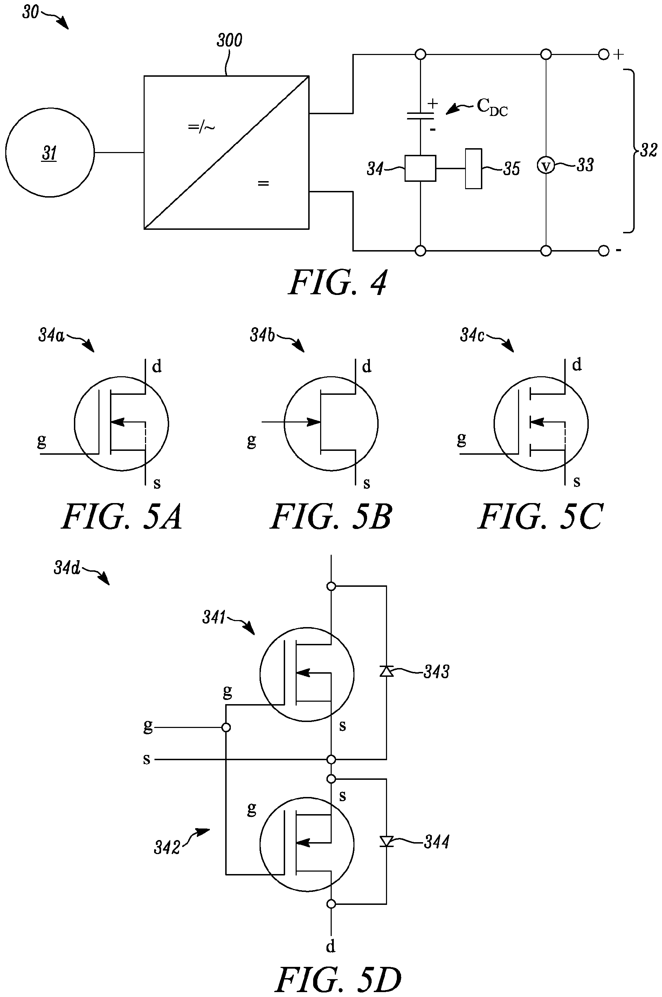

**FIG. 4** illustrates an electrical power system 30 in accordance with the present disclosure. The electrical power system 30 includes an electrical power source 31, which may be a DC power source or an AC power source, and a power converter 300, which may be a DC:DC power converter or an AC:DC power converter. The power converter 300 has an input 301 connected to the power source 31 and DC outputs DC+, DC- connected to a DC electrical network 32. A DC link capacitor $C_{DC}$ is connected between the DC outputs DC+, DC-.

The electrical power system 30 further comprises a power semiconductor switch 34 connected in series with the DC link capacitor $C_{DC}$, and a control unit 35 that controls the switching state of the power semiconductor switch 34. The control unit 35 is configured so that during normal operation the power semiconductor switch 34 is closed (i.e., so that the DC link capacitor $C_{DC}$ is connected to the output terminals DC+ and DC-) but, when a DC fault occurs, the power semiconductor switch 34 is open (i.e., so that the DC link capacitor $C_{DC}$ is isolated from at least one of the output terminals DC+ and DC-). For example, the control unit 35 may apply a suitable negative gate-source voltage to the switch 34 to open it when a DC network fault is detected. Thus, if a DC network fault occurs, the potentially damaging discharge of the DC link capacitor $C_{DC}$ is prevented (e.g., limited).

In one example, the control unit 35 comprises a signal processor communicatively coupled with one or more sensors that detect a DC network fault. For example, a voltage sensor 33 may measure the voltage across the DC output terminals DC+, DC- of the converter 100. The processor of the control unit 35 may then monitor the measured voltage and open the power semiconductor switch 34 if the voltage drops below a predetermined threshold voltage.

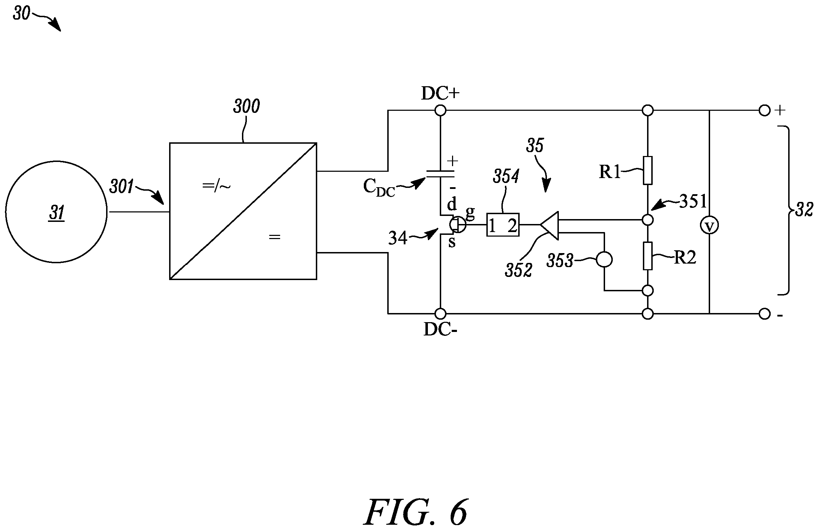

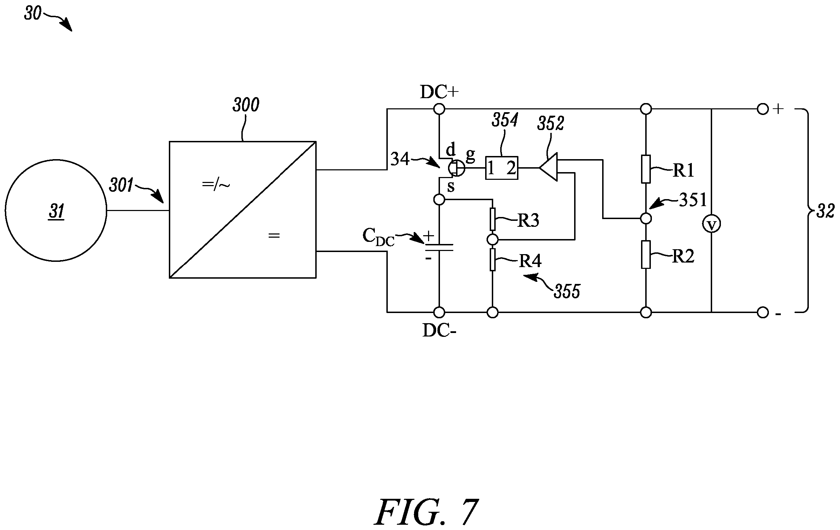

In another example, the control unit 35 is implemented in hardware, without a signal processor. In other words, the control unit 35 may be configured so that when a DC fault occurs, a resulting change in, e.g., a voltage, causes a change in the state of the control unit 35 that in turn causes the power semiconductor switch 34 to be opened. This may also be described as passive control. A benefit of using a hardware implemented control unit 35 may be that, compared with a signal processor-based control unit, the response may be faster. For example, the control unit 35 may be capable of responding to the fault earlier in the capacitor discharge process, or even before it begins. Examples of hardware-implemented control units 35 will be described with reference to FIG. 6 and FIG. 7.

In some examples, in addition to controlling the conduction state of the power semiconductor switch 34, the output from the control unit 35 may be used to trigger a protection strategy of the power converter 300. In one example, upon detecting a DC network fault, the output of the control unit 35 further triggers the power converter 300 to enter a crowbar configuration in which power from the power source 31 to the DC network 32 is stopped or at least reduced. In a crowbar configuration, only low-side or only high-side power semiconductor switches of the converter 300 are switched on. For the DC:DC power converter of FIG. 2A, this would mean that either MOSFETS 121-H, 122-H are on whilst MOSFETS 121-L, 122-L are off, or MOSFETS 121-H, 122-H are off whilst MOSFETS 121-L, 122-L are on. For the AC:DC power converter of FIG. 2B, it would mean that either MOSFETS 210-H of branches 210, 220, 230 are on whilst MOSETS 210-L of branches 210, 220, 230 are off, or MOSFETS 210-H of branches 210, 220, 230 are off whilst MOSETS 210-L of branches 210, 220, 230 are on.

**FIGS. 5A-5D** illustrate example implementations of the power semiconductor switch 34. FIG. 5A illustrates a depletion-mode MOSFET ("D-MOSFET") 34a, FIG. 5B illustrates a JFET 34b, FIG. 5C illustrates an enhancement-mode MOSFET 34c, and FIG. 5D illustrates an arrangement 34d comprising two D-MOSFETs 341, 342 connected in series opposition. The MOSFETs and JFETs of FIGS. 5A-5D may be Wide Bandgap (WGB) devices, for example SiC MOSFETs and SiC JFETs. The control unit 35 may be connected to the gate terminal ("g") of the device 34a-d to control its switching state.

D-MOSFETs 34a and JFETs 34b are 'normally-on' devices that include a conduction channel when there is no source-gate voltage. A benefit of using such devices is that at system start-up, where initial conditions are usually zero-voltage, the DC link capacitor $C_{DC}$ can be charged as normal without any firing of the power semiconductor switch 34 - something that may otherwise not be possible without an initial charge in the energy storage devices (e.g., capacitors). However, an enhancement-mode MOSFET 34c, which is a 'normally-off' device, could instead be used if appropriate mitigations are made, for example the provision of a dedicated energy storage device such as a battery to provide a source-gate voltage for system start.

Often, D-MOSFETs and JFETs are provided with an anti-parallel diode. In the context of the present disclosure, an anti-parallel diode may create a problem: even if the control unit 35 triggers the opening of the MOSFET or JFET to isolate the DC link capacitor $C_{DC}$, if the voltage subsequently reverses then the diode may be biased into conduction, allowing the DC link capacitor to discharge. The arrangement of FIG. 5D may be used to address this. Here, two D-MOSFETs 341, 342 are connected in series opposition, with a common source and gate. Specifically, the source terminal ("s") of the first D-MOSFET 341 is connected with the source terminal of the second D-MOSFET 342, and the gate terminal ("g") of the first D-MOSFET 342 is connected with the source terminal of the second D-MOSFET 342. The drain terminal ("d") of one of the D-MOSFETs is connected to the DC link capacitor while the drain terminal of the other D-MOSFET is connected to one of the DC output terminals DC+, DC-. When a fault is detected, the control unit 35 applies a voltage to the gate terminal to open the D-MOSFETS 341, 342 to isolate the DC link capacitor $C_{DC}$. If the voltage subsequently reverses, only one of the anti-parallel diodes 343, 344 can be biased into conduction, so there is still no discharge path through the arrangement 34d.

Turning to FIG. 6, this illustrates an example hardware implementation of the control unit 35. In this example, the control unit 35 includes a potential divider 351 and a comparator 352. The potential divider 351 is connected between the DC terminals and in parallel with the DC link capacitor $C_{DC}$ and includes two resistances, R1 and R2. One of the resistances may be greater than the other, and in this example, R1 > R2, though this is not intended to be limiting. The comparator 352, which may take the form of an operational amplifier, has two voltage inputs: one (in this example connected to the positive input terminal of the comparator) is the voltage across one of two resistors, in this example R2, the other voltage input (in this example connected to the negative input terminal of the comparator) represents a pre-defined voltage threshold, $V_{TH}$.

During normal operation, the voltage across R2 exceeds the threshold, $V_{TH}$, confirming the closed state of the power semiconductor switch 34. In the event of a fault that causes the voltage across R2 to fall below $V_{TH}$, the comparator 352 outputs a signal to the gate terminal ("g") of the power semiconductor switch 34 to open the switch 34 and isolate the DC link capacitor $C_{DC}$. For example, in the case of a D-MOSFET or JFET, the comparator 352 may be configured to apply a negative gate-source to the switch 34 with a magnitude greater than the manufacturer-specified voltage for opening the switch 34. It is noted that whilst a JFET 34b is illustrated in FIG. 6, another of the devices 34a-d described above may be used instead

The value of the pre-defined voltage threshold, $V_{TH}$, is selected based on the normal operating voltage of the DC network ($V_{DC}$), the resistance values R1, R2 and, for example, a desired level of sensitivity. By way of a specific example, to provide adequate sensitivity but a low risk of spurious activation of the protection mechanism, it may be desirable to isolate the DC link capacitor if the system voltage drops below 25% its normal value, $V_{DC}$. In this case, if the ratio R1/R2 is equal to 4, the voltage across R2 will be equal to 5% of $V_{DC}$ (i.e., $V_{DC}/20$) when the system voltage drops to 25% of $V_{DC}$. Thus, in this example, $V_{TH}$ may be selected to be $V_{DC}/20$. It will be appreciated that the voltage input to the positive input terminal of the comparator 352 may instead be taken across R1 and/or the resistance value of R2 may be greater than that of R1.

Where a signal processor-based control unit 35 is used, a voltage threshold may be stored in memory accessible to the signal processor. In a hardware implementation, $V_{TH}$ may be provided to the comparator 352 in another way, utilizing a voltage source. In a first example, illustrated in FIG. 6, the threshold voltage $V_{TH}$ is provided by a voltage source in the form of an energy storage device 353, for example a capacitor. With a suitably selected capacitance (e.g., based on $V_{DC}$, R1 and R2), the capacitor 353 applies a voltage of $V_{TH}$ to the second voltage input of the comparator 352. A second example is illustrated in **FIG. 7.** Here, the voltage source takes the form of a second potential divider 355 that is connected across and takes its voltage from the DC link capacitor, $C_{DC}$. The second potential divider 355 comprises third and fourth resistors, R3 and R4, connected in parallel across $C_{DC}$, in this example between the source terminal of the power semiconductor switch 34 and the negative DC terminal DC-. With suitable selection of the resistances R3, R4, the voltage across R3 which is provided as an input to the comparator 352 has a value of $V_{TH}$.

Both FIGS. 6 and 7 illustrate that the control unit 35 may, optionally, further comprise a latch circuit 354. The latch circuit 354 is configured to hold the control action from the comparator 352 for long enough to ensure the proper circuit actuation. For example, in some cases, the triggering signals input to and output by the comparator 352 may not last long enough to open the power semiconductor switch 34. Thus, the latch circuit 354, upon receiving a change in output from the comparator 352 due to the fault, holds the control action. The latch function may be provided by, for example, a Set/Reset (S-R) flip-flop, where the Set state initiates the protection function and the Reset removes the protection function.

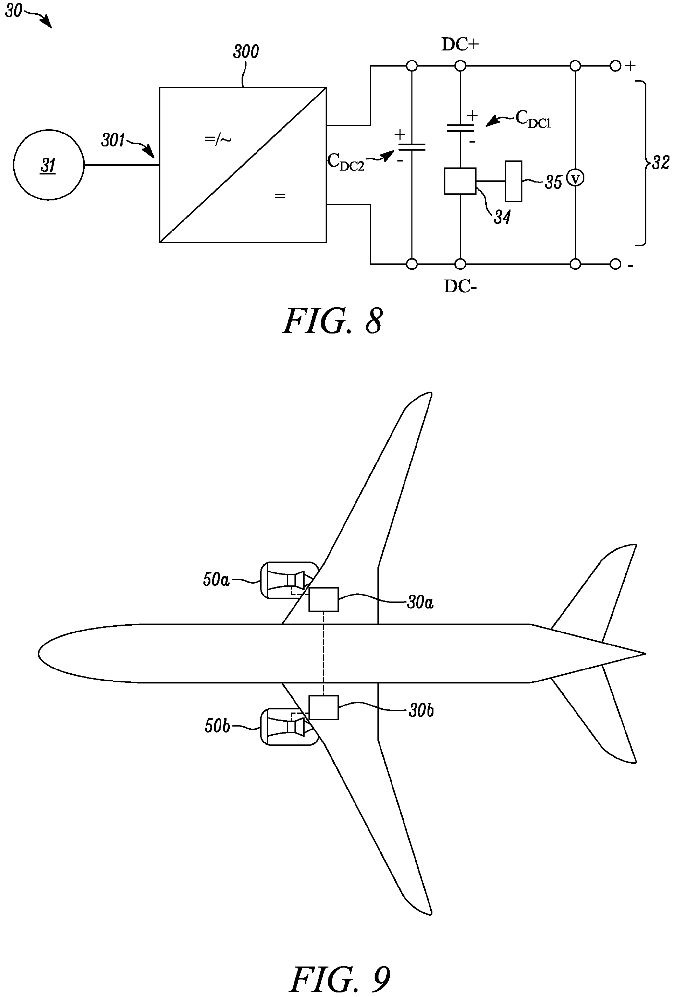

**FIG. 8** illustrates a further example in which the DC link capacitor, $C_{DC}$, is split into two parallel banks, $C_{DC1}$ and $C_{DC2}$. A first of the capacitors, $C_{DC1}$, is connected in series with a power semiconductor switch 34 whose conduction state is controlled by a control unit 35, as described above with references to FIGS. 4-7. Thus, discharge of the first capacitor $C_{DC1}$ is prevented in the event of a fault. The second capacitor, $C_{DC2}$, is not connected in series with a power semiconductor switch and is allowed to discharge in the event of a fault. $C_{DC1}$ may represent the majority of the capacitance of the DC link capacitor, (i.e., $C_{DC1} > C_{DC2}$). In one group of examples, $C_{DC1}$ is at least three times greater than $C_{DC2}$.

During normal use, the first, larger, capacitor $C_{DC1}$ may handle heavy and slow transients, whilst the second, smaller, capacitor $C_{DC2}$ may handle smaller but faster ripple current transients. In the event of a fault, the system is protected against the majority of the discharge current, as the switch 34 opens and $C_{DC1}$ is isolated. However, a smaller amount (e.g., 25% or less) of the total charge, representing that held by the $C_{DC2}$, is allowed to discharge. This may not represent a problem, as the magnitude and duration of the current pulse may be small enough for the components to handle without damage. Utilizing a power semiconductor switch 34 for only the largest of the capacitors, $C_{DC1}$, reduces the component count and mass of the system 30.

Recalling that capacitance adds in parallel, the second, smaller, capacitor $C_{DC2}$ may be split into a parallel bank of two or more smaller capacitors. Thus, although not depicted, there may be a three or more capacitors connected in parallel, with only the first and largest, $C_{DC1}$, connected in series with a power semiconductor switch 34.

**FIG.** 9 is a plan view of an aircraft 1. The aircraft comprises two gas turbine engines 50a, 50b and two electrical power systems 30a, 30b of the type described herein. The first electrical power system 30a may comprise a power source 31 in the form of a rotary electrical machine that is coupled to a shaft of a first of the gas turbine engines 50a. Likewise, the second electrical power system 30b may comprise a power source 31 in the form of a rotary electrical machine that is coupled to a shaft of a second of the gas turbine engines 50b. As illustrated by the dashed line, in this example, the two electrical power systems 30a, 30b may be electrically connected or connectable together. Other aircraft feature a different number of gas turbine engines, including zero, one, and three or more. The electrical power systems 30 described herein may be used in any type of aircraft.

It will be understood that the invention is not limited to the embodiments above-described and various modifications and improvements can be made without departing from the concepts herein. The invention has been described with reference to aerospace applications but could be used in other transport and non-transport applications. Except where mutually exclusive, any of the features may be employed separately or in combination with any other features and the disclosure extends to and includes all combinations and sub-combinations of one or more features described herein.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein.

**Claims**

1. An electrical power system (30), comprising:

7

an electrical power source (31);

a DC electrical network (32);

a power converter (300) comprising at least one input terminal (301) and first and second DC output terminals (DC+, DC-), the at least one input terminal connected to the electrical power source, the first and second DC output terminals connected to the DC electrical network;

a DC link capacitor ($C_{DC}$) connected between the first and second DC output terminals;

a power semiconductor switch (34) connected in series with the DC link capacitor between the first and second DC output terminals; and

a control unit (35) configured to respond to a fault in the DC electrical network by opening the power semiconductor switch, whereby discharge of the DC link capacitor is prevented.

2. The electrical power system (30) of claim 1, wherein the control unit (35) is configured to open the power semiconductor switch (35) in response to a drop in a voltage ($V_{DC}$) between the first and second DC output terminals (DC+, DC-).

3. The electrical power system (30) of claim 1 or claim 2, wherein the power semiconductor switch (34) comprises:

a depletion-mode MOSFET (34a); or

a JFET (34b); or

an arrangement (34d) comprising a pair of depletion-mode MOSFETs (341, 342) and anti-parallel diodes connected in series opposition.

4. The electrical power system (30) of any one of the preceding claims, wherein the control unit (35) is a hardware-implemented control unit.

5. The electrical power system (30) of any one of the preceding claims, wherein the control unit (35) comprises:

a potential divider (351) comprising a first resistor (R1) and a second resistor connected (R2) in series between the first and second DC output terminals (DC+, DC-); and

a comparator (352) configured to compare a voltage ($V_{R2}$) across the second resistor with a pre-determined threshold voltage ($V_{TH}$), and to output a signal to the power semiconductor switch (34) to open the power semiconductor switch if the voltage across the second resistor passes the pre-determined threshold voltage.

6. The electrical power system (30) of claim 5, wherein the comparator (352) comprises an operational amplifier.

7. The electrical power system (30) of claim 5 or claim 6, wherein a resistance of the first resistor (R1) is greater than a resistance of the second resistor (R2).

8. The electrical power system (30) of any one of claims 5 to 7, wherein the control unit (35) further comprises a voltage source (353, 355) configured to provide the pre-determined threshold voltage ($V_{TH}$) as an input to the comparator (352).

9. The electrical power system (30) of any one of claims 5 to 8, wherein the control unit (35) further comprises a latch (354) connected between an output of the comparator (352) and the power semiconductor switch (34).

10. The electrical power system (30) of any one of the preceding claims, wherein the DC link capacitor ($C_{DC}$) comprises a first capacitor ($C_{DC1}$) and a second capacitor ($C_{DC2}$) connected in parallel between the first and second DC output terminals (DC+, DC-), the power semiconductor switch (34) being connected in series with only the first capacitor.

11. The electrical power system (30) of claim 10, wherein a capacitance of the first capacitor ($C_{DC1}$) is greater than a capacitance of the second capacitor ($C_{DC2}$).

12. The electrical power system (30) of claim 11, wherein the capacitance of the first capacitor ($C_{DC1}$) is at least three times greater than the capacitance of the second capacitor ($C_{DC2}$).

13. The electrical power system (30) of any one of the preceding claims, wherein the control unit (35) is further configured to, in response to a fault in the DC electrical network, cause the power converter (300) to enter a crowbar configuration.

14. The electrical power system (30) of any one of the preceding claims, wherein the electrical power source (31) is a rotary electrical machine (21), and the power converter (300) is an AC:DC power converter (200).

15. The electrical power system (30) of any one of claims 1 to 14, wherein the electrical power source (31) is a DC power source (21), and the power converter (300) is a DC:DC power converter (100).

*FIG. 1A*

*FIG. 1B*

FIG. 2A

FIG. 2B

*FIG. 3*

FIG. 4

FIG. 5A     FIG. 5B     FIG. 5C

FIG. 5D

FIG. 6

EP 4 637 011 A1

FIG. 7

30

300

301

31

$C_{DC2}$

DC+

$C_{DC1}$

34

35 (v)

32

DC-

## FIG. 8

50a

30a

50b

30b

## FIG. 9

Europäisches
Patentamt

European
Patent Office

Office européen
des brevets

# EUROPEAN SEARCH REPORT

**Application Number**

EP 25 16 4326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RIXIN LAI ET AL: "A shoot-through protection scheme for converters built with SiC JFETs", ENERGY CONVERSION CONGRESS AND EXPOSITION, 2009. ECCE. IEEE, IEEE, PISCATAWAY, NJ, USA, 20 September 2009 (2009-09-20), pages 2301-2305, XP031608128, DOI: 10.1109/ECCE.2009.5316426 ISBN: 978-1-4244-2893-9 * pages 1-3 * | 1-15 | INV. H02M1/32 |
| X | US 2021/344188 A1 (CHEN YIRAN [GB] ET AL) 4 November 2021 (2021-11-04) * paragraphs [0007] - [0012], [0045], [0054]; figure 3 * * figure 6 * | 1-15 | |
| A | KUMAR ASHISH ET AL: "An intelligent medium voltage gate driver with enhanced short circuit protection scheme for 10kV 4H-SiC MOSFETs", 2017 IEEE ENERGY CONVERSION CONGRESS AND EXPOSITION (ECCE), IEEE, 1 October 2017 (2017-10-01), pages 2560-2566, XP033247136, DOI: 10.1109/ECCE.2017.8096486 * abstract * * * page 2 * * page 3, left-hand column; figures 2,3 * | 3,5-9 | **TECHNICAL FIELDS SEARCHED (IPC)** H02M H02H |
| A | CN 105 305 802 A (ZHANGZHOU KEHUA TECHNOLOGY CO LTD) 3 February 2016 (2016-02-03) * paragraphs [0026] - [0031]; figure 2 * | 10-12 | |

-/--

The present search report has been drawn up for all claims

| Place of search | Date of completion of the search | Examiner |
|---|---|---|
| The Hague | 28 August 2025 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 16 4326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/123533 A1 (CHIVITE ZABALZA FRANCISCO JAVIER [GB] ET AL) 20 April 2023 (2023-04-20) * paragraph [0081] * | 13 | |

-----

TECHNICAL FIELDS
SEARCHED    (IPC)

The present search report has been drawn up for all claims

| Place of search | Date of completion of the search | Examiner |
|---|---|---|
| The Hague | 28 August 2025 | Standaert, Frans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

page 2 of 2

**EP 4 637 011 A1**

## ANNEX TO THE EUROPEAN SEARCH REPORT
## ON EUROPEAN PATENT APPLICATION NO.

EP 25 16 4326

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2025

| Patent document cited in search report | | Publication date | Patent family member(s) | | Publication date |
|---|---|---|---|---|---|
| US 2021344188 | A1 | 04-11-2021 | CN | 112789777 A | 11-05-2021 |
| | | | EP | 3633811 A1 | 08-04-2020 |
| | | | EP | 3861612 A1 | 11-08-2021 |
| | | | US | 2021344188 A1 | 04-11-2021 |
| | | | WO | 2020069894 A1 | 09-04-2020 |
| CN 105305802 | A | 03-02-2016 | NONE | | |
| US 2023123533 | A1 | 20-04-2023 | EP | 4170881 A1 | 26-04-2023 |
| | | | US | 2023123533 A1 | 20-04-2023 |

EPO FORM P0459

For more details about this annex : see Official Journal of the European Patent Office, No. 12/82

**EP 4 637 011 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4283851 A1